# EUROPÄISCHE PATENTSCHRIFT

(11) **EP 1 753 793 B1**
(45) Veröffentlichungstag und Bekanntmachung des Hinweises auf die Patenterteilung: **04.08.2010**
(21) Anmeldenummer: 05743534.9
(22) Anmeldetag: 11.05.2005
(51) Int. Cl.: C08F 10/10, C08F 4/12

(54) **POLYMERISATION VON ISOBUTEN IN GEGENWART VON KOMPLEXEN VON ELEKTRONENDONOREN MIT FLUOR-HALTIGEN SÄUREN**
ISOBUTENE POLYMERISATION IN THE PRESENCE OF COMPLEXES OF ELECTRONDONORS AND FLUORINATED ACIDS
POLYMERISATION D'ISOBUTENE EN PRESENCE DE COMPLEXES DE DONNEURS D'ELECTRONS AVEC DES ACIDES FLUORES

(30) Priorität: 19.05.2004 EP 04011971
(43) Veröffentlichungstag der Anmeldung: 21.02.2007
(73) Patentinhaber: BASF SE, 67056 Ludwigshafen (DE)
(72) Erfinder: HERRLICH-LOOS, Mirjam, 68165 Mannheim (DE); DROHMANN, Christian, B-2930 Brasschaat (BE); MIJOLOVIC, Darijo, 68309 Mannheim (DE); WETTLING, Thomas, 67117 Limburgerhof (DE); MACH, Helmut, 69115 Heidelberg (DE)
(86) Internationale Anmeldenummer: PCT/EP2005/005093
(87) Internationale Veröffentlichungsnummer: WO 2005/116094

(56) Entgegenhaltungen:
- EP-A- 0 322 241
- GB-A- 401 297
- US-A- 5 556 932

## Beschreibung

Die Erfindung betrifft ein Verfahren zur Polymerisation von Isobuten in flüssiger Phase.

Die Polymerisation von Isobuten zu im Wesentlichen einfach ethylenisch ungesättigten Polyisobutenen ist bekannt. Die Doppelbindung kann in dem Makromolekül verschiedene Positionen einnehmen, die sich in ihrer Reaktivität unterscheiden. Die so genannten hochreaktiven Polyisobutene sind begehrte Zwischenprodukte zur Herstellung von Additiven für Schmier- und Kraftstoffe verwendet. Diese haben einen hohen Anteil an Molekülen, in denen die Doppelbindung α-ständig, d. h. in Form einer terminalen Gruppe der Formel -[-C(CH₃)=CH₂], oder β-ständig, d. h. in Form einer terminalen Gruppe der Formel -[-CH=C(CH₃)₂], angeordnet ist.

Hochreaktive Polyisobutene können z. B. durch Bortrifluorid-katalysierte Polymerisation von Isobuten oder Isobuten-haltiger Kohlenwasserstoffströme erhalten werden. Bei der Katalyse mit Bortrifluorid kommt es jedoch als Nebenreaktion zur Anlagerung von Fluor an das Polyisobuten bzw. zur Bildung nieder- und mittelmolekularer fluorhaltiger Nebenprodukte, wie tert-Butylfluorid, Diisobutylfluorid oder Triisobutylfluorid, die das Polyisobuten kontaminieren. Wenn als Isobutenquelle technische C₄-Kohlenwasserstoffströme, wie das so genannte Raffinat I, verwendet werden, die neben Isobuten größere Mengen linearer Butene, insbesondere 1-Buten enthalten, werden signifikant höhere Fluorgehalte beobachtet.

Die GB 486,161 beschreibt ein Verfahren zur Herstellung hochmolekularer Produkte aus Isobuten und mehrfach ungesättigten Olefinen. Als Katalysator ist unter anderem BF₃HF genannt. Die Patentschrift enthält keine weiteren ausführbaren Angaben zur Durchführung einer Polymerisationsreaktion unter Verwendung dieses Katalysators; sie befasst sich nicht mit hochreaktiven Polyisobutenen.

Die EP 322 241 beschreibt ein Verfahren zur Herstellung hochreaktiver Polyisobutene, bei dem man Isobuten in Gegenwart von Bortrifluorid und eines Cokatalysators polymerisiert und das Polymierisationsprodukt unverzüglich quencht. Als Cokatalysator soll z. B. Fluorwasserstoff geeignet sein.

Die EP 337 737 offenbart ein Verfahren zur Herstellung von Poly-n-butenen, bei dem man 1-Buten, cis- und/oder trans-2-Buten in Gegenwart von Bortrifluorid und Fluorwasserstoff polymerisiert.

Die US 5,556,932 beschreibt Chlorfreie, nich-tradenende Copolymere des Isobutens mit C₄-C₁₀-Dienen. Die Copolymere werden durch Kationische Polymerisation hergestellt, wobei das Isobuten mit dem Dien mit Hilfe eines Bortrifluorid/C₁-C₁₅-Alkoholkomplexes im Am- oder Abwesenheit von Fluorwasserstoff polymerisiert wird.

Aus der WO 89/01001 geht ein Verfahren zur Oligomerisierung niederer Alkene in Gegenwart eines Katalysatorsystems hervor, das Bortrifluorid und eine Säure, z. B. Phosphorsäure, umfasst.

Die WO 95/26814 beschreibt geträgerte Lewissäure-Katalysatoren, die sich zur Katalyse von Kohlenwasserstoffumwandlungen wie Olefinpolymerisationen eignen sollen und bestimmte Salze von Supersäuren enthalten. Nachteilig ist die aufwändige Katalysatorherstellung; außerdem müssen Vorkehrungen getroffen werden, um den Katalysator gleichmäßig im Reaktionsgemisch suspendiert zu halten.

Der Erfindung liegt die Aufgabe zu Grunde, ein Verfahren anzugeben, das die Herstellung von hochreaktiven Isobutenpolymeren mit niedrigem Fluorgehalt erlaubt.

Diese Aufgabe wird gelöst durch ein Verfahren zur Herstellung von im Wesentlichen einfach ethylenisch ungesättigten Isobutenpolymeren, worin die Summe der Anteile der Moleküle mit α- und der Moleküle mit β-ständiger Doppelbindung wenigstens 75 Mol% beträgt, durch Polymerisation von Isobuten in flüssiger Phase in Gegenwart eines gelösten oder dispergierten Katalysator-Komplexes, der besteht aus einem oder mehreren Elektronendonoren und (ii) eine besteht aus einem oder mehreren Verbindung der allgemeinen Formel I

HₐMe_{b}[MFₓ]_{c} (I)

worin
- Me: für ein Metall der Oxidationsstufe m steht,
- M: für ein unter den Elementen der Gruppe 2, 3, 4, 5, 10, 11, 13, 14 oder 15 des Periodensystems der Elemente gemäß IUPAC-Notation ausgewähltes Element der Oxidationszahl n steht,
- a: für eine ganze Zahl ≥ 1 steht,
- b: für eine ganze Zahl ≥ 0 steht,
- x: für eine ganze Zahl ≥ 2 steht,
- c: für [(a+mb)/(x-n)] steht.

Unter "Isobutenpolymer" werden Polymere verstanden, die zu wenigstens 50 Gew.-% aus Monomereinheiten aufgebaut sind, die sich von Isobuten ableiten. Bevorzugte Isobutenpolymere umfassen wenigstens 80 Gew.-%, vorzugsweise wenigstens 90 Gew.-% und insbesondere wenigstens 95 Gew.-%, von Isobuten abgeleitete Monomereinheiten.

Soweit vorhanden, leiten sich die von Isobuten verschiedenen Monomereinheiten von ethylenisch ungesättigten Monomeren ab, die mit Isobuten unter Bedingungen der kationischen Polymerisation copolymerisierbar sind. Hierzu zählen insbesondere Vinylaromaten wie Styrol, C₁-C₄-Alkylstyrole wie 2-, 3- und 4-Methylstyrol, sowie 4-tert-Butylstyrol, Isoolefine mit 5 bis 10 Kohlenstoffatomen wie 2-Methylbuten-1, 2-Methylpenten-1, 2-Methylhexen-1, 2-Ethylpenten-1, 2-Ethylhexen-1 und 2-Propylhepten-1, und Diene, wie 1,3-Butadien und Isopren. Daneben kommen auch Olefine in Betracht, die eine Silylgruppe aufweisen wie 1-Trimethoxysilylethen, 1-(Trimethoxysilyl)propen, 1-(Trimethoxysilyl)-2-methylpropen-2, 1-[Tri(methoxyethoxy)si-lyl]ethen, 1-[Tri(methoxyethoxy)silyl]propen, und 1-[Tri(meth-oxyethoxy)silyl]-2-methylpropen-2.

Als Isobutenquellen für das erfindungsgemäße Verfahren eignen sich sowohl Isobuten selbst als auch Isobuten-haltige C₄-Kohlenwasserstoffströme, beispielsweise C₄-Raffinate, C₄-Schnitte aus der Isobutan-Dehydrierung, C₄-Schnitte aus Steamcrackern, FCC-Crackern (Fluid Catalysed Cracking), die vorzugsweise weitgehend vom darin enthaltenen 1,3-Butadien befreit sind. Geeignete C₄-Kohlenwasserstoffströme enthalten in der Regel weniger als 1000 ppm, vorzugsweise weniger als 200 ppm Butadien. Typischerweise liegt die Summe der Anteile von Isobutan, Butan, 1-Buten, cis- und trans-2-Buten in den C₄-Kohlenwasserstoffströmen im Bereich von 20 bis 90 Gew.-%, meist 40 bis 70 Gew.-%, wobei 10 bis 70 Gew.-% (bezogen auf das Gesamtgewicht des Stroms) auf die von Isobuten verschiedenen Butene entfallen können. Derartige C₄-Kohlenwasserstoffströme sind bevorzugte Einsatzmaterialien für das erfindungsgemäße Verfahren. Als Isobutenquelle eignet sich aber auch ein Gemisch von reinem Isobuten mit einem nicht-olefinischen Verdünnungsmittel.

Die Polymerisation erfolgt in flüssiger Phase, d. h. bei Druck- und Temperaturbedingungen, bei denen das Reaktionsgemisch zumindest teilweise in kondensierter flüssiger Form vorliegt. Üblicherweise umfasst das Reaktionsgemisch ein Verdünnungsmittels oder Verdünnungsmittelgemisch, das gegenüber den eingesetzten Reagenzien im Wesentlichen inert ist. Geeignete Verdünnungsmittel sind gesättigte aliphatische oder cycloaliphatische Kohlenwasserstoffe, wie Butan, Pentan, Hexan, Heptan, Oktan, Cyclopentan, Cyclohexan, Methylcyclohexan; aromatische Kohlenwasserstoffe, wie Toluol oder Ethylbenzol; ungesättigte Kohlenwasserstoffe, wie Ethylen, 1-Buten, 2-Buten, halogenierte Kohlenwasserstoffe wie Methylchlorid, Dichlormethan oder Trichlormethan sowie Mischungen der vorgenannten Verbindungen. Vorzugsweise werden die Lösungsmittel vor ihrem Einsatz im erfindungsgemäßen Verfahren von sauerstoffhaltigen Verunreinigungen wie Kohlenmonoxid, Wasser, Aceton, Carbonsäuren oder sauren Verunreinigungen wie Mineralsäuren befreit, beispielsweise durch Adsorption an festen Adsorbentien, wie Aktivkohle, Molekularsieben oder Ionenaustauschern. Bei Einsatz von C₄-Schnitten übernehmen die von Isobuten verschiedenen Kohlenwasserstoffe die Rolle eines im Wesentlichen inerten Verdünnungsmittels.

Im erfindungsgemäßen Verfahren wird ein ungeträgerter Katalysator verwendet, der im flüssigen Reaktionsgemisch gelöst oder dispergiert bzw. emulgiert ist. Der Katalysator umfasst eine Verbindung der obigen Formel (I). In der Formel (I) ist Me fakultativ; bevorzugte Verbindungen der Formel (I) entsprechen der Formel Hₐ[MFₓ], worin M, a und x die bereits angegebene Bedeutung haben.

Der Katalysator ist im wesentlichen frei von Verbindungen der Formel MFₓ₋₁, d. h. in bevorzugten Ausführungsformen, in denen HBF₄ als Verbindung der Formel (I) verwendet wird, ist der Katalysator im Wesentlichen frei von BF₃. Verbindungen der Formel MFₓ₋₁ (wie insbesondere BF₃) sind bekanntlich ihrerseits Katalysatoren der Polymerisation von Isobuten; ihre Anwesenheit führt dazu, dass sich die Vorteile der vorliegenden Erfindung nicht in vollem Umfang einstellen.

Das Zentralatom M der Fluor-haltigen Säure steht für ein unter den Elementen der Gruppe 2, 3, 4, 5, 10, 11, 13, 14 oder 15 des Periodensystems der Elemente gemäß IUPAC-Notation ausgewähltes Element, vorzugsweise für Be, B, Al, Si, P, Ti, V, Ga, Ge, As, Y, Zr, Nb, In, Sn oder Sb, insbesondere für Be, B, Al, Si oder P und besonders bevorzugt für B.

Die Natur des Metalls Me ist nicht kritisch. Me steht vorzugsweise für ein Alkalimetall, wie Li, Na, K, ein Erdalkalimetall, wie Ca, oder für Ag oder Au.

In bevorzugten Ausführungsformen ist HₐMe_{b}[MFₓ]_{c} unter H₂BeF4, HBF₄, HPF₆, H₂SiF₆, HMeSiF₆, HAlF₄, H₃AlF₆ ausgewählt, worin Me für Li, Na oder K steht.

Der Elektronendonor (im Folgenden auch als "Donor" bezeichnet) enthält wenigstens ein Heteroatom mit einem freien Elektronenpaar, beispielsweise ein Sauerstoff-, Stickstoff- Schwefel- und/oder Phosphoratom, vorzugsweise ein Sauerstoff-, Stickstoff- und/oder Schwefelatom, insbesondere ein Sauerstoff- und/oder Stickstoffatom

In bestimmten Ausführungsformen weist der Donor keine aktiven Wasserstoffatome auf, d. h. insbesondere keine Wasserstoffatome, die an ein Sauerstoff- oder Stickstoffatom gebunden sind.

Geeignete sauerstoffhaltige Donoren sind Alkohole, Ketone, Ether, Carbonsäuren und/oder Carbonsäureester.

Als Alkohole eigenen sich beispielsweise C₁-C₁₃-Alkanole und C₅-C₆-Cycloaikanole oder C₂-C₁₀-Alkandiole, wie Methanol, Ethanol, n-Propanol, Isopropanol, 2-Butanol, t-Butanol, 2-Ethylhexanol; Cyclohexylalkohol; Ethylenglykol oder Propylenglykol.

Geeignete Ketone sind unter anderem Aceton, Ethylmethylketon, Acetoaceton oder Acetophenon.

Als Ether kommen C₂-C₂₀-Dialkylether; cyclische Ether, insbesondere 5- oder 6-gliedrige cyclische Ether mit einem oder zwei Sauerstoffatomen im Ring, wie Tetrahydrofuran oder Dioxan, in Betracht.

Geeignete Carbonsäuren bzw. -ester sind Essigsäure, Propionsäure, Buttersäure, Capronsäure, Benzoesäure bzw. Ester davon, z. B. die Methyl- oder Ethylester.

Weiter eignen sich stickstoffhaltige Donoren wie Ammoniak, organische Amine bzw. Polyamine oder Hydroxylamin. Nitrilverbindungen oder Amide.

Beispielhafte organische Amine sind Methylamin, Dimethylamin, Ethylamin, Diethylamin, Triethylamin, Propylamin, Isopropylamine, Diisopropylamin, 2-Ethylhexylamin, Diisobutylamin, sec-Butylamin, tert-Butylamin, Tri-n-octylamin, Di-2-ethylhexylamin, Allylamin, Diallylamin, Triallylamin, Anilin, Benzylamin, Ethylendiamin, Hexamethylendiamin, Tretramethylethylendiamin, Diethylentriamin, Triethylentetramin und Tetraethylpentamin, 3-(Methylamino)propylamin, 3-(Dimethylamino)propylamin und 3-(Dibutylamino)propylamin; Oxyamine wie 3-Methoxypropylamin, 3-Ethoxypropylamin, und 3-(2-Ethylhexyloxy)propylamin; Hydroxylamine wie N-Methylethanolamin, N,N-Dimethylethanolamin, N,N-Diethylethanolamin, N,N-Dibutylethanolamin, N-Methyldiethanolamin, N-(2-Aminoethyl)ethanolamin und 3-Amino-1-propanol; und Pyridine wie Pyridine und 4-Aminopyridin. Ferner kann man Aminosäuren wie β-Alanin verwenden. Die Aufzählung soll nicht abschließend sein.

Beispielhafte Nitrilverbindungen sind Acetonitril, Propionitril und Benzonitril.

Beispielhafte Amide sind Formamid, Dimethylformamid, Acetamid, Dimethylacetamid, Propionamid, Benzamid, N,N-Dimethylbenzamid.

Beispielhafte schwefelhaltige Donoren sind Thiole, wie Dodecylmercaptan, Thioether, Dialkyldisulfide, oder Sulfoxide, wie Dimethylsulfoxid, Sulfone, Sulfonsäureester, wie Methylsulfonsäuremethylester, Dialkylsulfate, wie Dimethylsulfat.

Geeignete phosphorhaltige Donoren sind Phosphane, wie Triphenylphosphin, Phosphanoxide, wie Triphenylphosphanoxid, Trialkyl-, Triaryl- oder gemischte Aryl/Alkylphosphite, Trialkyl-, Triaryl- oder gemischte Aryl-/Alkylphosphate; Verbindungen der Formel PR₃₋ₓ(OR)ₓ oder P(O)R₃₋ₓ(OR)ₓ (worin R für einen Alkyl- oder Arylrest steht und x = 1 oder 2); Phosphorsäureamide, wie Hexamethylphosphorsäuretriamid.

Weitere geeignete Liganden sind polymere Liganden, wie Polyvinylakohol, Polyvinylamin, Polyether, wie Polyalkylenglykole, z. B. Polyethylenglykole, Polyalkylenglykolmono- oder -dialkylether, Polyalkylenamine, wie Polyethylenamine, Polyalkylenimine, z. B. Polyethylenimine mit Molmassen von vorzugsweise 300 bis 20000, insbesondere von 300 bis 5000, Polyamide, wie Nylon 6 oder Nylon 6,6, und aliphatische oder aromatische Polyketone.

Im Allgemeinen ist der Ligand unter Alkoholen, Ketonen, Ethern, Aminen, Nitrilen, Amiden und Sulfoxiden ausgewählt.

In besonders bevorzugten Ausführungsformen umfasst der Donor einen ersten Donor L¹ und einen zweiten Donor L², wobei L¹ ein Ether ist und L² unter Alkoholen, Carbonsäuren, Carbonsäureestern, Aminen, Nitrilen, Amiden und Sulfoxiden ausgewählt ist. Bevorzugte Donoren L¹ sind unter Ethern der Formel R-O-R' ausgewählt, worin R und R' unabhängig voneinander für Methyl, Ethyl, n-Propyl, i-Propyl, n-Butyl, i-Butyl, s-Butyl oder tert-Butyl stehen. Vorzugsweise steht wenigstens einer der Reste R und R' für Methyl.

In besonders bevorzugten Ausführungsformen umfasst der Donor einen ersten Donor L¹ und einen zweiten Donor L², wobei L¹ ein von einem tertiären Alkylether verschiedener Ether ist und L² unter Alkoholen, tertiären Alkylethern, Carbonsäuren, Carbonsäureestern, Aminen, Nitrilen, Amiden und Sulfoxiden ausgewählt ist. Bevorzugte Donoren L¹ sind unter Ethern der Formel R-O-R' ausgewählt, worin R und R' unabhängig voneinander für Methyl, Ethyl, n-Propyl, i-Propyl, n-Butyl, i-Butyl oder s-Butyl stehen. Vorzugsweise steht wenigstens einer der Reste R und R' für Methyl; Dimethylether ist besonders bevorzugt. Bevorzugte Donoren L² sind Methyl-tert-butylether, Diisopropylether, Methanol, Dimethylformamid, Dimethylsulfoxid.

In bevorzugten Ausführungsformen liegt der Donor L¹ in wenigstens stöchiometrischer Menge, z. B. in einer Menge von 0,8 bis 1,2 Moläquivalenten, bezogen auf das Element M, vor. Der Donor L² liegt vorzugsweise in einer Menge von bis zu 0,4, vorzugsweise 0,001 bis 0,15 Moläquivalenten, bezogen auf das Element M, vor.

Ein besonders bevorzugter Katalysator ist HBF₄ • O(CH₃)₂, gegebenenfalls in Kombination mit einem weiteren Elektronendonor, insbesondere den vorstehend als L² beschriebenen.

Die Konzentration des Katalysators im Reaktor beträgt bei der Herstellung von Isobutenpolymeren mit zahlenmittleren Molekulargewichten im Bereich von 200 bis 5000 beispielsweise 0,01 bis 3 Gew.-%, bezogen auf die flüssige Reaktionsphase; bei der Herstellung von Isobutenpolymeren mit zahlenmittleren Molekulargewichten im Bereich von 5000 bis 50000 beispielsweise 0,001 bis 0,01 Gew.-%.

Die erfindungsgemäß verwendeten Katalysatoren können auf beliebige zweckmäßige Weise hergestellt werden. Sie können vorgefertigt oder in situ im Polymerisationsgemisch erzeugt werden. Die Katalysator-Komplexe können in separaten Reaktoren vor ihrem Einsatz im erfindungsgemäßen Verfahren vorgebildet werden, nach ihrer Bildung zwischengelagert und je nach Bedarf in die Polymerisationsapparatur eindosiert werden. Diese Variante ist bevorzugt. Zur vorab-Herstellung des Katalysators komplexiert man eine Fluorhaltigen Säure mit dem ausgewählten Donor oder löst die Fluorhaltigen-Säure darin. Beispielsweise kann man Tetrafluorborsäure mit Dimethylether umsetzen. Die Fluorelementsäure kann ihrerseits durch Umsetzung einer Fluorverbindung der Formel MFₓ₋₁ mit Fluorwasserstoff HF erhalten werden, z. B. durch Umsetzung von BF₃ mit HF. Alternativ setzt man einen Komplex, der aus der Fluorverbindung und einem Donor besteht, mit Fluorwasserstoff um. So kann man beispielsweise ein Bortrifluoridetherat, z. B. Bortrifluorid-dimethyletherat oder Bortrifluorid-diethyletherat, mit Fluorwasserstoff umsetzen, wobei der Katalysator erhalten wird. Die Umsetzungen erfolgen vorzugsweise in Substanz oder alternativ in einem inerten Lösungsmittel wie den vorstehend genannten Verdünnungsmittel. Der Fluorwasserstoff kann gasförmig oder in Form einer Lösung in einem inerten Lösungsmittel eingesetzt werden.

Eine andere Variante besteht darin, die Katalysator-Komplexe in situ in der Polymerisationsapparatur zu erzeugen. Bei dieser Verfahrensweise wird entweder
(i) der Donor und getrennt davon die Säure HₐMFₓ, oder
(ii) die Fluorverbindung MFₓ₋₁ gemeinsam mit dem Donor und getrennt davon Fluorwasserstoff; oder
(iii) die Fluorverbindung MFₓ₋₁, der Donor und Fluorwasserstoff in getrennten Strömen in die Polymerisationsapparatur eingespeist und im Reaktionsgemisch gelöst bzw. dispergiert. Hierbei setzen sich die Komponenten zum katalytisch aktiven Komplex um. Die Komponenten werden zweckmäßigerweise in einem geeigneten Lösungsmittel gelöst und in Form einer Lösung in das Reaktionsgemisch eingespeist. Anstelle eines zusätzlichen Lösungsmittels kann bei der in situ-Erzeugung des Katalysator-Komplexes Isobuten oder die Reaktionsmischung aus nicht umgesetztem Isobuten und Polyisobuten als Lösungsmittel fungieren.

Wenn der Katalysatorkomplex mehr als einen Donor umfasst, können die Donoren vorgemischt werden oder getrennt voneinander in verschiedenen Stadien der Katalysatorbildung zugegeben werden. Es ist bisweilen zweckmäßig, einen vorgebildeten Komplex, der eine Fluorelementsäure und einen ersten Donor umfasst, und einen zweiten Donor in getrennten Strömen zum Polymerisationsgemisch zu dosieren.

Der katalytisch aktive Komplex wird im Reaktionsgemisch fein dispergiert. Die Feindispergierung erfolgt durch geeignete Vorrichtungen, wie Rührer, vorzugsweise Hochgeschwindigkeitsrührer, statische Mischer, Blenden zur Querschnittsverringerung, Mischpumpen und dergleichen.

Man kann die erfindungsgemäße Polymerisation auch in Gegenwart eines Fluoridfängers durchführen. Als Fluoridfänger eignen sich siliziumorganische Verbindungen, die über wenigstens eine Si-O-, Si-C-, Si-H-Bindung oder eine Bindung von einem Siliziumatom zu einem von Fluor verschiedenen Halogenatom verfügen. Geeignete siliziumorganische Verbindungen sind z. B. Phenyltrimethylsilan, Phenyltrichlorsilan oder Trimethylsilan.

Bevorzugte derartige siliziumorganische Verbindungen sind solche der allgemeinen Formel II:

R^{a}ₙSi(OR^{b})₄₋ₙ (II)

worin n für 1, 2 oder 3 steht,
- R^{a}: gleich oder verschieden sein können und unabhängig voneinander C₁- C₂₀-Alkyl, C₅-C₇-Cycloalkyl, Aryl oder Aryl-C₁-C₄-alkyl bedeuten, wobei die drei letztgenannten Reste auch eine oder mehrere C₁-C₁₀-Alkylgruppen als Substituenten aufweisen können, und
- R^{b}: gleich oder verschieden sind und C₁-C₂₀-Alkyl bedeuten oder für den Fall, dass n für 1 oder 2 steht, zwei Reste R^{b} gemeinsam für Alkylen stehen können.

In der Formel II steht n vorzugsweise für 1 oder 2. R^{a} bedeutet vorzugsweise eine C₁-C₈-Alkylgruppe, und insbesondere eine verzweigte oder über ein sekundäres C-Atom gebundene Alkylgruppe, wie Isopropyl, Isobutyl, 2-Butyl, oder eine 5-, 6- oder 7-gliedrige Cycloalkylgruppe, oder eine Arylgruppe. Die Variable R^{b} steht vorzugsweise für eine C₁-C₄-Alkylgruppe oder für einen Phenyl-, Tolyl- oder Benzylrest.

Beispiele für derartige bevorzugte Verbindungen sind Dimethoxydiisopropylsilan, Dimethoxyisobutylisopropylsilan, Dimethoxydi-isobutylsilan, Dimethoxydicyclopentylsilan, Dimethoxyisobutyl-2-butylsilan, Diethoxyisobutylisopropylsilan, Triethoxytoluylsilan, Triethoxybenzylsilan und Triethoxyphenylsilan.

Die Polymerisation kann diskontinuierlich oder vorzugsweise kontinuierlich erfolgen. Bei einem kontinuierlichen Verfahren wird kontinuierlich ein Teil der im Polymerisationsreaktor entstandenen Reaktionsmischung ausgetragen. Eine dem Austrag entsprechende Menge an Einsatzmaterialien wird dem Polymerisationsreaktor kontinuierlich zugeführt. Das Umlauf/Zulauf-Verhältnis, d. h. das Verhältnis der im Polymerisationsreaktor befindlichen Stoffmenge zu der Menge, die ausgetragen wird, liegt im Allgemeinen im Bereich von 1 000:1 bis 1:1, bevorzugt im Bereich von 500:1 bis 5:1 und insbesondere im Bereich von 20:1 bis 100:1 Vol/Vol. Die mittlere Verweildauer der zu polymerisierenden Monomere im Polymerisationsreaktor kann 5 Sekunden bis mehrere Stunden betragen. Verweilzeiten von 1 bis 30 min, insbesondere 2 bis 20 min sind bevorzugt. Die Polymerisation erfolgt in den für die kontinuierliche Polymerisation üblichen Reaktoren, wie Rührkesseln, Rohr-, Rohrbündel- und Schlaufenreaktoren, wobei Schlaufenreaktoren, d. h. Rohr(bündel)reaktoren mit Umlauf und turbulenter Strömung oder Einbauten wie statischen Mischern, d. h. mit Rührkesselcharakteristik, bevorzugt sind. Besonders günstig sind dabei Schlaufenreaktoren mit Rohrquerschnitten, die zu turbulenter Strömung führen. Es können hintereinander geschaltete Reaktoren verwendet werden, insbesondere Anordnungen aus Haupt- und Nachreaktor.

Die Polymerisation erfolgt im Allgemeinen bei einer Temperatur im Bereich von -60 °C bis +40 °C, vorzugsweise weniger als 0 °C, besonders bevorzugt im Bereich von -5 °C bis -40 °C und speziell im Bereich von -10 °C bis -30 °C. Die Polymerisationswärme wird entsprechend mit Hilfe einer Kühlvorrichtung abgeführt. Diese kann beispielsweise mit flüssigem Ammoniak als Kühlmittel betrieben werden.

Eine andere Möglichkeit, die Polymerisationswärme abzuleiten, ist die Siedekühlung. Dabei wird die freiwerdende Wärme durch Verdampfen leichtflüchtiger Bestandteile des Reaktionsgemisches, z. B. eines leichtflüchtigen Lösungsmittels, abgeführt. Verfahrenstechnisch besonders empfehlenswert ist es, Verdünnungsmittel einzusetzen, die im gewünschten Temperaturbereich sieden.

Vorzugsweise arbeitet man im erfindungsgemäßen Polymerisationsverfahren unter isothermen Bedingungen, d.h. die Temperatur der flüssigen Reaktionsmischung im Polymerisationsreaktor hat einen stationären Wert und ändert sich während des Betriebs des Reaktors nicht oder nur in geringem Maße.

Bei der kontinuierlichen Polymerisation von Isobuten beträgt die stationäre Konzentration des Isobutens in der flüssigen Reaktionsphase 0,2 bis 50 Gew.-%, vorzugsweise 0,5 bis 20 Gew.-% und insbesondere 1 bis 10 Gew.-%, bezogen auf die flüssige Reaktionsphase.

Eine weitergehende Abreicherung von Isobuten kann in einem nachgeschalteten Reaktor erreicht werden. Im Allgemeinen ist einem rückvermischten Hauptreaktor ein Nachreaktor nachgeschaltet, der durch angenäherte Propfenströmungscharakteristik gekennzeichnet ist. Eine bevorzugte Arbeitsweise für eine mehrstufige Methode ist in der WO 96/40808 beschrieben. Die Polymerisation erfolgt gemäß dieser Methode in ihrer einfachsten Ausgestaltung in zwei Polymerisationsstufen. Der Austrag aus der ersten Polymerisationsstufe wird vorzugsweise unmittelbar in die zweite Polymerisationsstufe geleitet. Hier wird die Polymerisation ohne Zusatz frischen Isobutens fortgesetzt. Beispielsweise ist es möglich, in der ersten Polymerisationsstufe einen Isobutenumsatz von 5 bis 98 vorzugsweise von 50 bis 95%, insbesondere von 50 bis 90 %, einzustellen und in der zweiten Stufe die Polymerisation dann fortzuführen. Die zweite Polymerisationsstufe wird dabei vorteilhaft bei gleicher oder einer niedrigeren Polymerisationstemperatur betrieben als die erste Polymerisationsstufe, in der Regel beträgt die Temperaturdifferenz dabei 0 bis20 °C, vorzugsweise 0 bis10 °C.

Im allgemeinen wird in der zweiten Polymerisationsstufe der Isobutenumsatz so eingestellt, dass der Gesamtumsatz des Isobutens in der ersten und zweiten Polymerisationsstufe im allgemeinen bei 80 bis 100 %, vorzugsweise bei 90 bis 100%, insbesondere bei 95 bis 100 %, liegt.

Falls das Polymerisationsgemisch in der zweiten Stufe noch mehr als 2Gew.-% Isobuten, bezogen auf das in die erste Stufe eingespeiste Isobuten,enthält, kann alternativ das nicht umgesetzte Isobuten gemeinsam mit dem Polymerisationsaustrag aus der zweiten Polymerisationsstufe ohne weitere Aufarbeitung einer dritten Polymerisationsstufe zugeführt werden und dort bis zu einem Isobuten-Gehalt von unter 2 Gew.-% weiterpolymerisiert werden.

Obgleich die Anwendung einer zweiten und dritten Polvmerisationsstufe auch beim Einsatz von Reinisobuten von Vorteil ist, erweist sie sich als besonders vorteilhaft, wenn Isobuten-haltige C₄-Kohlenwasserstoffstrome, wie C₄-Raffiate oder C₄-Schnitte als Einsatzstoff verwendet werden, da auf diese Weise neben dem Polyisobuten ein qualitativ hochwertigeres, praktisch Fluor-freies, Isobuten-armes Raffinat II erhalten wird.

Die aus dem Polymerisationsreaktor ausgetragene Reaktionsmischung enthält noch polymerisierbare Monomere und Katalysator. Daher schreitet in der Regel die Polymerisation auch im Austrag fort. Hierdurch kann sich das im Polymerisationsreaktor gebildete Polymer nachteilig hinsichtlich Molekulargewicht, Molekulargewichtsverteilung und Endgruppengehalt verändern. Um eine weitere Reaktion zu verhindern, wird daher üblicherweise die Polymerisation durch Deaktivierung des Katalysators abgebrochen. Die Deaktivierung kann beispielsweise durch Zugabe von Wasser, Alkoholen, Acetonitril, Ammoniak oder wässrigen Lösungen von Mineralbasen oder durch Einleiten des Austrags in eines der vorgenannten Medien bewirkt werden. Bevorzugt ist die Deaktivierung mit Wasser, die vorzugsweise bei Temperaturen im Bereich von 1 bis 80 °C (Wassertemperatur) durchgeführt wird.

Die Komplex-Katalysatoren können auch aus dem Austrag weitgehend abgetrennt und in die Polymerisationsreaktion zurückgeführt werden. Beim Ruhenlassen des Reaktionsgemisches, z. B. in einem mit langsamer Geschwindigkeit durchströmten Phasentrenngefäß, koaleszieren die feinverteilten Tröpfchen des Katalysators rasch und gehen in eine kohärente Phase über. Die Komplextröpfchen bzw. die kohärente Phase haben eine deutlich höhere Dichte als die Polymerlösung. Sie können daher in der Regel mit Hilfe von Abscheidern, Separatoren oder sonstigen Sammelbehältern von der polymerreichen, katalysatorarmen Produktphase abgetrennt werden.

Mittels eines so genannter Koaleszers, d. h. einer Filtriereinrichtung, die über geeignete Porendurchmesser und/oder hydrophiles Filtermaterial kleine hydrophile Komplextröpfchen in größere Tropfen umwandelt, kann die Bildung einer kohärenten Katalysatorphase verbessert werden. Als hydrophiles Filtermaterial werden häufig Glasfasern, Phenolharze oder Phenolharzbeschichtungen verwendet, aber auch Acrylnitrilfasern oder Beschichtungen sind an dieser Stelle geeignet. Häufig wird diese Koaleszierung durch einen Separator, in diesem Falle einer Hydrophobfiltration, unterstützt. Ein hydrophobes Filtermaterial, gegebenenfalls in Kombination mit engem Porendurchmesser, verhindert den Durchtritt feindisperser Katalysatortöpfchen. Die von der Katalysatorphase abgetrennte polymerreiche Produktphase ist im Allgemeinen homogen und enthält nur noch geringe Mengen löslicher Katalysatoranteile. Diese werden in der zuvor beschriebenen Weise, vorzugsweise mit Wasser, deaktiviert.

Die Summe der Anteile der Moleküle mit α- und β-ständiger Doppelbindung (bezogen auf die Zahl aller olefinisch ungesättigten Makromoleküle in einer Probe) in dem nach dem erfindungsgemäßen Verfahren erhaltenen Polyisobuten beträgt wenigstens 75 Mol-%, vorzugsweise wenigstens 80 Mol-%, am meisten bevorzugt wenigstens 95 Mol-%. Der Anteil der Moleküle mit α-ständiger Doppelbindung (bezogen auf die Zahl aller olefinisch ungesättigten Makromoleküle in einer Probe) beträgt vorzugsweise wenigstens 60 Mol-%, besonders bevorzugt wenigstens 75 Mol-%. Die Anteile der Moleküle mit α- und β-ständigen Doppelbindung können durch ¹H-NMR- und/oder ¹³C-NMR-Spektroskopie ermittelt werden, wie dem Fachmann geläufig ist.

Das nach dem erfindungsgemäßen Verfahren erhaltene Polyisobuten weist ein zahlenmittleres Molekulargewicht Mn von 200 bis 50000, vorzugsweise 400 bis 5000, insbesondere 550 bis 2800 auf. Die Dispersizität (D = Mw/Mn) beträgt typischerweise weniger als 10, vorzugsweise weniger als 2,2 und insbesondere weniger als 2,0. Polyisobutene mit einem zahlenmittleren Molekulargewicht von weniger als 1500 haben typischerweise eine Dispersizität von weniger als 1,7.

Im erhaltenen Isobutenpolymer beträgt der Fluorgehalt nach Entfernung des Verdünnungsmittels typischerweise weniger als 30 ppm, meist weniger als 15 ppm. In besonders bevorzugten Ausführungsformen liegt der Fluorgehalt zwischen der Nachweisgrenze und 10 ppm. Gewünschtenfalls kann der Fluorgehalt durch Behandlung des Isobutenpolymers mit einem anorganischen Adsorptionsmittel, wie Aluminiumoxid, weiter verringert werden.

Die Erfindung wird durch die folgenden Beispiele näher veranschaulicht.

In den Beispielen werden folgende Abkürzungen verwendet:
- IB:: Isobuten
- R:: Raffinat I
- Me₂O:: Dimethylether
- Et₂O:: Diethylether
- i-Pr₂O:: Diisopropylether
- MTBE:: Methyl-tert-butylether
- MeOH:: Methanol
- DMF:: Dimethylformamid
- DMSO:: Dimethylsulfoxid
- PhSi(OEt)₃:: Phenyltriethoxysilan

### Beispiele 1 bis 11: Diskontinuierliche Polymerisation

Die Umsetzungen wurden in einem 500 ml-Vierhalskolben mit 250 ml-Tropftrichter mit Druckausgleich und aufgesetztem Trockeneiskühler, Thermometer, Septum und Überleitung für Stickstoffgas durchgeführt. Raffinat I der nachstehend angegebenen Zusammensetzung wurde über einen flexiblen Stahlschlauch in eine gekühlte Vorlage, eingeleitet, die Molekularsieb 3Å enthielt, und unter Trockeneiskühlung verflüssigt. Das verflüssigte Raffinat I wurde dann über einen flexiblen Stahlschlauch in den Tropftrichter überführt. Die Volumenabmessung erfolgte mittels der Skalierung des Tropftrichters. Zu dem im Vierhalskolben vorgelegten Raffinat I wurde mittels einer Einwegspritze der Katalysatorkomplex dosiert. Nach der Reaktionszeit brach man die Umsetzung mit Isopropanol ab und verdünnte das Reaktionsgemisch mit 150 ml Hexan. Die Lösung wurde dreimal mit Wasser gewaschen; das Lösungsmittel wurde unter vermindertem Druck entfernt. Im Beispiel 1 wurde an Stelle des Raffinats I eine Lösung von Isobuten in Hexan (50:50 Vol./Vol.) verwendet. Die Ergebnisse sind in Tabelle 1 zusammengefasst.

### Beispiele 12 bis 18 und Vergleichsbeispiele 19 und 20: Kontinuierliche Polymerisation

Man verwendete einen Reaktor, der aus einem Stahlrohr von 3 m Länge und einem Innendurchmesser von 6 mm bestand, über den durch eine Zahnradpumpe 100 l/h Reaktorinhalt im Kreis geführt wurden. Rohr und Pumpe hatten ein Volumen von etwa 100 ml. Der Teflonschlauch und der Pumpenkopf waren in einem Kältebad von -25 °C (Kryostat) angeordnet. Über eine Kapillare mit 2 mm Innendurchmesser führte man Raffinat I (Beispiele 13 bis 20) bzw. Isobuten/Hexan-Lösung (50:50 Vol./Vol.; Beispiel 12) zu, das auf -25 °C vorgekühlt und an Molekularsieb 3 Å auf weniger als 3 ppm Wasser getrocknet worden war. Der Katalysatorkomplex wurde direkt in den Umlauf auf der Saugseite der Umwälzpumpe eingespeist.

Der Reaktionsaustrag wurde unmittelbar nach Verlassen des Umlaufs mit Wasser in einer Mischpumpe gequencht. Nach Abtrennung der Wasserphase leitete man die organische Phase zur Trocknung über Zeolith 3 Å.

In den Vergleichsbeispielen 19 und 20 wurde ein Bortrifluorid umfassender Katalysatorkomplex verwendet.

Die Ergebnisse sind in der Tabelle 2 angegeben.

**Zusammensetzung des Raffinat I**

| | |
|---|---|
| Isobutan | 6 Gew.-% |
| n-Butan | 15 Gew.-% |
| Isobuten | 45 Gew.-% |
| Buten-1 | 23 Gew.-% |
| cis-Buten-2 | 5 Gew.-% |
| trans-Buten-2 | 8 Gew.-% |
| Butadien | 0,020 Gew.-% |

**Tabelle 1**

| Beispiel | Feed | Katalysator/mmol | IB/ HBF₄ [mol/mol] | Zeit [min] | Fluor [ppm] | Mn [g/mol] | Mw/Mn | α [%] |
|---|---|---|---|---|---|---|---|---|
| 1 | IB | HBF₄/Me₂O 7,5/7,5 | 178 | 180 | 3 | 782 | 1,4 | 73 |
| 2 | R | HBF₄/Et₂O/MTBE 7,5/7,511,36 | 146 | 180 | 3 | 558 | 1,1 | 76 |
| 3 | R | HBF₄/Et₂O/i-Pr₂O 7,5/7,5/7,5 | 146 | 180 | 13 | 1092 | 1,5 | 81 |
| 4 | R | HBF₄/Me₂O 7,5/7,5 | 178 | 180 | 7 | 720 | 1,2 | 78 |
| 5 | R | HBF₄/Me₂O/i-Pr₂O 11,2/11,2/0,19 | 119 | 90 | 11 | 852 | 1,5 | 52 |
| 6 | R | HBF₄/Me₂O/MTBE 8,2/8,2/0,23 | 162 | 120 | 5 | 1022 | 1,5 | 69 |
| 7 | R | HBF₄/Me₂O/Methanol 5,6/5,6/0,59 | 237 | 90 | 2 | 971 | 1,5 | 73 |
| 8 | R | HBF₄/Me₂O/Wasser 7,5/7,5/0,14 | 178 | 180 | 3 | 522 | 1,1 | 83 |
| 9 | R | HBF₄/Me₂O/DMF 5,6/5,6/0,26 | 237 | 90 | 4 | 679 | 1,3 | 68 |
| 10 | R | HBF₄/Me₂O/DMSO 8,1/8,1/0,28 | 165 | 90 | 10 | 732 | 1,3 | 67 |
| 11 | R | HBF₄Me₂O/PhSi(OEt)₃ 11,2/11,210,83 | 119 | 90 | 6 | 660 | 1,2 | 71 |

**Tabelle 2**

| Beispiel | Feed | Katalysator/mmol | IB/ HBF₄ [mol/mol] | Fluor [ppm] | Mn [g/mol] | Mw/Mn | α [%] |
|---|---|---|---|---|---|---|---|
| 12 | IB | HBF₄/Me₂O 23,3/23,3 | 229 | 4 | 732 | 1,7 | 78 |
| 13 | R | HBF₄/Et₂O 16,5/16,5 | 153 | 2 | 573 | 1,1 | 79 |
| 14 | R | HBF₄/Et₂O/MTBE 29,3/29,3/3,1 | 171 | 1 | 582 | 1,1 | 72 |
| 15 | R | HBF₄/Me₂O/MTBE 22,6/22,6/1,2 | 222 | 3 | 760 | 1,2 | 78 |
| 16 | R | HBF₄/Me₂O/MTBE 21,2/21,4/0,4 | 238 | 7 | 1297 | 1,7 | 75 |
| 17 | R | HBF₄/Me₂O/MTBE 26,4/26,4/2,0 | 190 | 44 | 2032 | 2,1 | 80 |
| 18 | R | HBF₄/Me₂O/MeOH 14,1 /14,1 /2, 0 | 326 | 6 | 938 | 1,6 | 73 |
| 19* | R | BF₃/MeOH 13,0/22,7 | | 120 | 1230 | 2,4 | 79 |
| 20* | R | BF3/MeOH 17,0/22,7 | | 79 | 868 | 2,7 | 63 |

| | | | | | | | |
|---|---|---|---|---|---|---|---|
| * Vergleichsbeispiel | | | | | | | |

## Patentansprüche

1. Verfahren zur Herstellung von im Wesentlichen einfach ethylenisch ungesättigten Isobutenpolymeren, worin die Summe der Anteile der Moleküle mit α- und der Moleküle mit β-ständiger Doppelbindung wenigstens 75 Mol-% beträgt, durch Polymerisation von Isobuten in flüssiger Phase in Gegenwart eines gelösten oder dispergierten Katalysator-Komplexes, der besteht aus (i) einem oder mehreren Elektronendonoren und (ii) einer Verbindung der allgemeinen Formel I
HₐMe_{b}[MFₓ]_{c} (I)
worin
Me für ein Metall der Oxidationsstufe m steht,
M für ein unter den Elementen der Gruppe 2, 3, 4, 5, 10, 11, 13, 14 oder 15 des Periodensystems der Elemente gemäß IUPAC-Notation ausgewähltes Element der Oxidationszahl n steht,
a für eine ganze Zahl ≥ 1 steht,
b für eine ganze Zahl ≥ 0 steht,
x für eine ganze Zahl ≥ 2 steht,
c für [(a+mb)/(x-n)] steht
und der Katalysator im wesentlichen frei ist von BF₃, wenn HBF₄ als Verbindung der Formel (I) verwendet wird.

2. Verfahren nach Anspruch 1, wobei das Isobutenpolymer wenigstens 80 Gew.-% von Isobuten abgeleitete Monomereinheiten umfasst.

3. Verfahren nach Anspruch 1 oder 2, wobei M für ein unter Be, B, Al, SI, P, Ti, V, Ga, Ge, As, Y, Zr, Nb, In, Sn und Sb ausgewähltes Element steht.

4. Verfahren nach Anspruch 3, wobei HₐMe_{b}[MFₓ]_{c} unter H₂BeF₄, HBF₄, HPF₈, H₂SiF₆, HMeSiF₆, HAlF₄, H₃AlF₆ ausgewählt ist, worin Me für Li, Na oder K steht.

5. Verfahren nach einem der vorhergehenden Ansprüche, wobei der Elektronendonor wenigstens ein Stickstoff-, Sauerstoff- und/oder Schwefelatom umfasst.

6. Verfahren nach Anspruch 5, wobei der Elektronendonor unter Alkoholen, Ketonen, Ethern, Carbonsäuren, Carbonsäureester, Aminen, Nitrilen, Amiden und Sulfoxiden ausgewählt ist.

7. Verfahren nach Anspruch 5, wobei der Elektronendonor unter Polyvinylakohol, Polyvinylamin, Polyethern, Polyalkylenaminen, Polyalkyleniminen, Polyamiden und Polyketonen ausgewählt ist.

8. Verfahren nach Anspruch 6, wobei der Elektronendonor einen ersten Donor L¹ und einen zweiten Donor L² umfasst und L¹ ein Ether ist und L² unter Alkoholen, Carbonsäuren, Carbonsäureestern, Aminen, Nitrilen, Amiden und Sulfoxiden ausgewählt ist.

9. Verfahren nach Anspruch 6, wobei der Elektronendonor einen ersten Donor L¹ und einen zweiten Donor L² umfasst und L¹ ein von einem tertiären Alkylether verschiedener Ether ist und L² unter Alkoholen, tertiären Alkylethern, Carbonsäuren, Carbonsäureestern, Aminen, Nitrilen, Amiden und Sulfoxiden ausgewählt ist.

10. Verfahren nach Anspruch 9, wobei L¹ unter Ethern der Formel R-O-R' ausgewählt ist, worin R und R' unabhängig voneinander für Methyl, Ethyl, n-Propyl, i-Propyl, n-Butyl, i-Butyl oder s-Butyl stehen.

11. Verfahren nach Anspruch 10, wobei der Katalysator HBF₄ • OO(CH₃)₂ umfasst:

12. Verfahren nach einem der vorhergehenden Ansprüche, wobei man als Isobutenquelle einen C₄-Kohlenwasserstoffstrom verwendet, der von Isobuten verschiedene Butene enthält.

13. Verfahren nach einem der Ansprüche 1 bis 11, wobei man als Isobutenquelle ein Gemisch von Isobuten mit einem nicht-olefinischen Verdünnungsmittel verwendet.

## Claims

1. A process for preparing essentially singly ethylenically unsaturated isobutene polymers in which the sum of the proportions of molecules having the double bond in the α position and molecules having the double bond in the β position is at least 75 mol% by polymerization of isobutene in the liquid phase in the presence of a dissolved or dispersed catalyst complex which comprises (i) one or more electron donors and (ii) a compound of the general formula I
HₐMe_{b}[MFₓ]_{c} (I)
where
Me is a metal in the oxidation state m,
M is an element in the oxidation state n selected from among the elements of groups 2, 3, 4, 5, 10, 11, 13, 14 and 15 of the Periodic Table of the Elements according to the IUPAC notation,
a is an integer ≥ 1,
b is an integer ≥ 0,
x is an integer ≥ 2,
c is [(a+mb)/(x-n)],
wherein the catalyst is essentially free of BF₃ when HBF₄ is used as compound of the formula (I).

2. The process according to claim 1, wherein the isobutene polymer comprises at least 80% by weight of monomer units derived from isobutene.

3. The process according to claim 1 or 2, wherein M is an element selected from among Be, B, Al, Si, P, Ti, V, Ga, Ge, As, Y, Zr, Nb, In, Sn and Sb.

4. The process according to claim 3, wherein HₐMe_{b}[MFₓ]_{c} is selected from among H₂BeF₄, HBF₄, HPF₆, H₂SiF₆, HMeSiF₆, HAlF₄, H₃AlF₆, where Me is Li, Na or K.

5. The process according to any of the preceding claims, wherein the electron donor comprises at least one nitrogen, oxygen and/or sulfur atom.

6. The process according to claim 5, wherein the electron donor is selected from among alcohols, ketones, ethers, carboxylic acids, carboxylic esters, amines, nitriles, amides and sulfoxides.

7. The process according to claim 5, wherein the electron donor is selected from among polyvinyl alcohol, polyvinylamine, polyethers, polyalkylenamines, polyalkylenimines, polyamides and polyketones.

8. The process according to claim 6, wherein the electron donor comprises a first donor L¹ and a second donor L² and L¹ is an ether and L² is selected from among alcohols, carboxylic acids, carboxylic esters, amines, nitriles, amides and sulfoxides.

9. The process according to claim 6, wherein the electron donor comprises a first donor L¹ and a second donor L² and L¹ is an ether other than a tertiary alkyl ether and L² is selected from among alcohols, tertiary alkyl ethers, carboxylic acids, carboxylic esters, amines, nitriles, amides and sulfoxides.

10. The process according to claim 9, wherein L¹ is selected from among ethers of the formula R-O-R', where R and R' are each, independently of one another, methyl, ethyl, n-propyl, i-propyl, n-butyl, i-butyl or s-butyl.

11. The process according to claim 10, wherein the catalyst comprises HBF₄·O(CH₃)₂.

12. The process according to any of the preceding claims, wherein a C₄-hydrocarbon stream comprising butenes other than isobutene is used as isobutene source.

13. The process according to any of claims 1 to 11, wherein a mixture of isobutene with a nonolefinic diluent is used as isobutene source.

## Revendications

1. Procédé pour la préparation de polymères d'isobutène essentiellement éthyléniquement monoinsaturés, la somme des proportions des molécules présentant une double liaison en position α et des molécules présentant une double liaison en position β étant d'au moins 75% en mole, par polymérisation d'isobutène en phase liquide en présence d'un complexe de catalyseur dissous ou dispersé, qui est constitué par (i) un ou plusieurs donneurs d'électrons et (ii) et un composé de formule générale I
*HₐMe_{b}*[*MFₓ*]*_{c}* (*I*)
où
Me représente un métal de l'étage d'oxydation m,
M représente un élément de nombre d'oxydation n choisi parmi les éléments des groupes 2, 3, 4, 5, 10, 11, 13, 14 ou 15 du système périodique des éléments selon la notation IUPAC,
a représente un nombre entier ≥ 1,
b représente un nombre entier ≥ 0,
x représente un nombre entier ≥ 2,
c représente [(a+mb)/(x-n)]
et le catalyseur est essentiellement exempt de BF₃, lorsqu'on utilise du HBF₄ comme composé de formule (I).

2. Procédé selon la revendication 1, où le polymère d'isobutène comprend au moins 80% en poids d'unités monomères dérivées d'isobutène.

3. Procédé selon la revendication 1 ou 2, où M représente un élément choisi parmi Be, B, Al, Si, P, Tri, V, Ga, Ge, As, Y, Zr, Nb, In, Sn et Sb.

4. Procédé selon la revendication 3, où HₐMeb[MFₓ]_{c} est choisi parmi H₂BeF₄, HBF₄, HPF₆, H₂SiF₆, HmeSiF₆, HAlF₄, H₃AlF₆, où Me représente Li, Na ou K.

5. Procédé selon l'une quelconque des revendications précédentes, où le donneur d'électrons comprend au moins un atome d'azote, d'oxygène et/ou de soufre.

6. Procédé selon la revendication 5, où le donneur d'électrons est choisi parmi les alcools, les cétones, les éthers, les acides carboxyliques, les esters d'acide carboxylique, les amines, les nitriles, les amides et les sulfoxydes.

7. Procédé selon la revendication 5, où le donneur d'électrons est choisi parmi le poly(alcool vinylique), la polyvinylamine, les polyéthers, les polyalkylène-amines, les polyalkylène-imines, les polyamides et les polycétones.

8. Procédé selon la revendication 6, où le donneur d'électrons comprend un premier donneur L¹ et un deuxième donneur L² et L¹ représente un éther et L² est choisi parmi les alcools, les acides carboxyliques, les esters d'acide carboxylique, les amines, les nitriles, les amides et les sulfoxydes.

9. Procédé selon la revendication 6, où le donneur d'électrons comprend un premier donneur L¹ et un deuxième donneur L² et L¹ représente un éther différent d'un alkyléther tertiaire et L² est choisi parmi les alcools, les alkyléthers tertiaires, les acides carboxyliques, les esters d'acide carboxylique, les amines, les nitriles, les amides et les sulfoxydes.

10. Procédé selon la revendication 9, où L¹ est choisi parmi les éthers de formule R-O-R', où R et R' représentent, indépendamment l'un de l'autre, méthyle, éthyle, n-propyle, i-propyle, n-butyle, i-butyle ou s-butyle.

11. Procédé selon la revendication 10, dans lequel le catalyseur comprend HBF₄ * O(CH₃)₂.

12. Procédé selon l'une quelconque des revendications précédentes, où on utilise comme source d'isobutène un flux d'hydrocarbures en C₄, qui contient des butènes différents d'isobutène.

13. Procédé selon l'une quelconque des revendications 1 à 11, où on utilise comme source d'isobutène un mélange d'isobutène avec un diluant non oléfinique.
